Europäisches Patentamt

European Patent Office

Office européen des brevets

(11) Publication number: **0 258 599**
A2

# EUROPEAN PATENT APPLICATION

(21) Application number: 87110444.4

(22) Date of filing: 18.07.87

(51) Int. Cl.⁴: **B60J 1/17** , B60R 13/06

(30) Priority: 23.07.86 IT 5367786

(43) Date of publication of application:
09.03.88 Bulletin 88/10

(84) Designated Contracting States:
BE DE ES FR GB SE

(71) Applicant: AGES S.r.l.
Via Trinita, 80
I-10026 Santena Torino(IT)

(72) Inventor: Rosario, Ocera
Corso Brunelleschi 19
I-10041 Torino(IT)
Inventor: Castello, Massimo
Via Volvera 5/5
I-10045 Piossasco(IT)

(74) Representative: Modiano, Guido et al
MODIANO, JOSIF, PISANTY & STAUB
Modiano & Associati Via Meravigli, 16
I-20123 Milan(IT)

(54) Composite weather strip for guiding and retaining concealable slideable windows, particularly for automotive vehicles.

(57) The composite weather strip comprises horizontal, subvertical and vertical portions with differentiated geometry connected to one another. The vertical upright portion slideably engages and retains a slider (26) for guiding and retaining a window pane (K). At least the vertical portion of the weather strip is provided with a series of through slots which are spaced complementarily with respect to the openings (A1,A2) formed on a vertical raceway portion of the upright. Through the slots protrude corresponding lateral tabs (22,23) supported by an insert (24) in rigid material provided with guiding and retention flaps for the window pane's slider (26). The lateral tabs (22,23) are adapted to engage in snap-together engagement relationship in the spaced openings (A1,A2) of the vertical portion of the raceway to retain the weather strip and to transfer directly to the sheeting (15) of the door the stresses produced by the window pane (K) slider (26).

Fig. 6

# COMPOSITE WEATHER STRIP FOR GUIDING AND RETAINING CONCEALABLE SLIDEABLE WINDOWS, PARTICULARLY FOR AUTOMOTIVE VEHICLES

The present invention relates to a weather strip for the guiding and retention of concealable slideable windows, particularly for automotive vehicles.

As is known, weather strips fitted on the frames of the window bays of the doors of automotive vehicles and intended to accommodate the edge of the window pane when the same is in closed position, consist of flocked rubber channels having portions with differentiated geometry, juxtaposed and rigidly associated by glueing or over-molding.

More precisely, in the horizontal or subvertical portions of the frame, the weather strip has a cross section in the shape of a simple channel with flocked sealing lips adapted to allow the entry and the exit of the window pane. Conversely, in the vertical portion or portions the weather strip has such a geometry as to engage and slideably retain a guiding and retaining slider rigidly associated with the edge of the window pane; the slider being slideable in contact with a flap, flocked or not, which protrudes inside the weather strip and is preferably made of elastomer with a high value of hardness (40-60 Sh.D) and with a low friction and wear coefficient.

Up to now, to retain weather strips having a differentiated geometry as described, a metal raceway, inserted and rigidly coupled by spot-welding between the inner sheeting and the outer sheeting of the door, has been used; said raceway being provided, at its bottom, with undercut necks adapted to receive corresponding continuous external tabs of the weather strip and/or lateral gripping teeth obtained by cutting on the lateral walls of said raceway. Currently, for reasons related to cost and automation, the method of manufacture and the geometry of the retention raceway have been modified and, more precisely, at the vertical upright portion of the frame said raceway is now obtained by cutting and pressing, providing, on the outer (or inner) sheeting of the door a comb-like tab which is folded substantially in the shape of a U and is connected to the inner (outer) sheeting by spot-welding. The result is a raceway which, at least in said vertical upright portion, is provided, on both sides, with a series of evenly spaced openings. This different geometry of the raceway does not allow the use of known weather strips as specified, nor does it allow their adaptation, since the continuous outer gripping tabs provided on said known weather strips, even if they can be punched economically to obtain single and spaced tabs capable of engaging in the above mentioned openings of the retention raceway, do not have sufficient rigidity to ensure the correct retention of the weather strip, taking into account that the retention slider supported by the window pane acts within the upright portion.

The aim of the present invention is to provide a composite weather strip for the guiding and retention of concealable slideable window panes, having a shape and an arrangement of parts suitable to allow a correct and solid retention in the new raceways provided on the door-frame and having at least the vertical upright portion modified as described above.

Another object of the present invention is to provide a composite weather strip which is easy to assemble and is improved in functional efficiency, especially with regard to the guiding and the sliding of said retention slider supported by the window pane.

The above cited aim, and objects and others which will become apparent hereinafter, are achieved, according to the present invention by a composite weather strip having horizontal, subvertical and vertical portions with differentiated geometry, wherein the vertical upright portion is provided with means to slideably engage and retain a guiding and retention slider supported by the edge of the window pane, characterized in that at least said vertical portion of the weather strip is provided, on both vertical walls, with a series of through slots which are spaced complementarily with respect to the openings which are preformed on the vertical portion of the raceway of the upright; slots through which protrude corresponding lateral (or substantially lateral) tabs supported by an insert in rigid material which accommodates inside the raceway housing of the weather strip and is provided with one or more guiding and retention flaps for the window pane's slider; said lateral tabs being adapted to engage in snap-together engagement relationship in the spaced openings of the vertical portion of the raceway to retain the weather strip and to transfer to the sheeting of the door the stresses produced by said slider of said window pane.

Further characteristics and advantages of the invention will become apparent from the following detailed description and with reference to the accompanying drawings, wherein:

-fig. 1 is an elevation view of a door of an automotive vehicle;

-fig. 2 is a detail perspective view, in enlarged scale and in partial cross section, of a portion of raceway for retaining the weather strip related to the upright of the door of fig. 1,

-fig. 3 is a perspective view of a portion of the insert in rigid material for retaining the weather strip;

-fig. 4 is a perspective view of the insert of fig. 3 accommodated in the weather strip;

-figs. 5 and 6 are transverse cross section views of the door upright, with the weather strip operating, taken at the solid parts and respectively at the openings of the retention raceway of the weather strip.

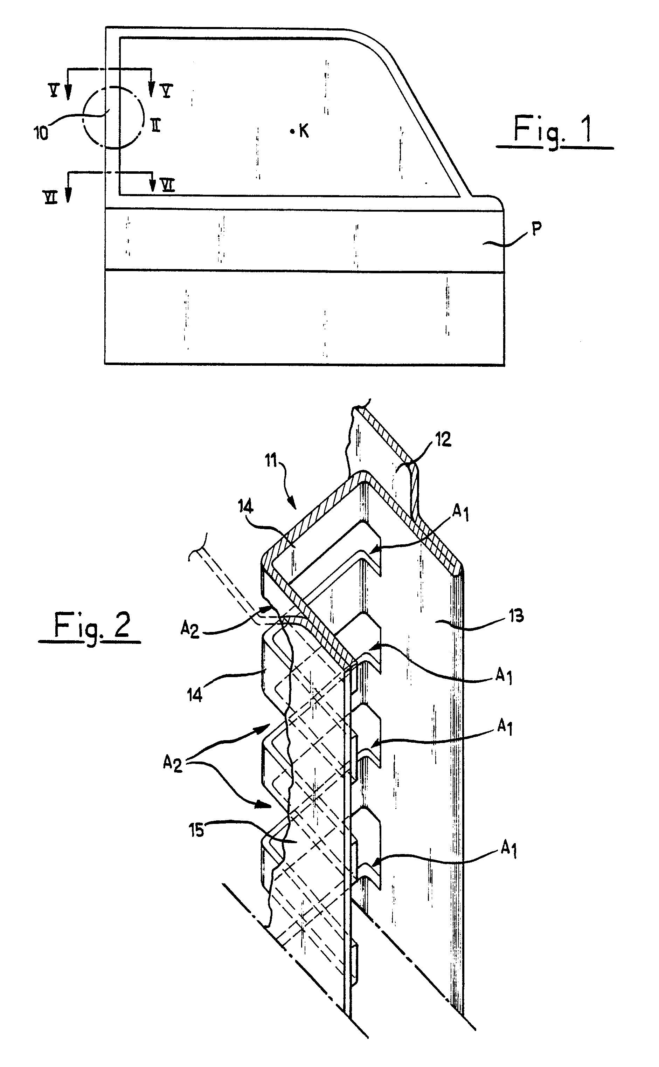

Initially with reference to figures 1 and 2, the reference numeral 10 indicates the rectilinear and vertical upright of the door P of an automotive vehicle and the numeral 11 indicates the raceway for the retention of the elastomeric weather strip wherein is slideable the window pane K, which is of the concealable type. As illustrated in detail in figure 2, currently at the upright 10 the raceway 11 is obtained by blanking and pressing, providing, preferably on the outer sheeting 12, a comb-like tab 13 formed by a plurality of evenly spaced strips 14 which are folded in the shape of a U and connected to the inner sheeting 15 advantageously by spot-welding. The resulting raceway 11 thus has, on both sides, series of evenly spaced openings A1-A2.

The corresponding portion of upright of the elastomeric weather strip 16 is accommodated in the raceway 11, said portion connecting, in a per se known manner, by continuity of extrusion and/or by glueing and/or over-molding, to the remaining horizontal and subvertical weather strip portions, not illustrated, the profile and coupling manner whereof are not within the scope of the present invention.

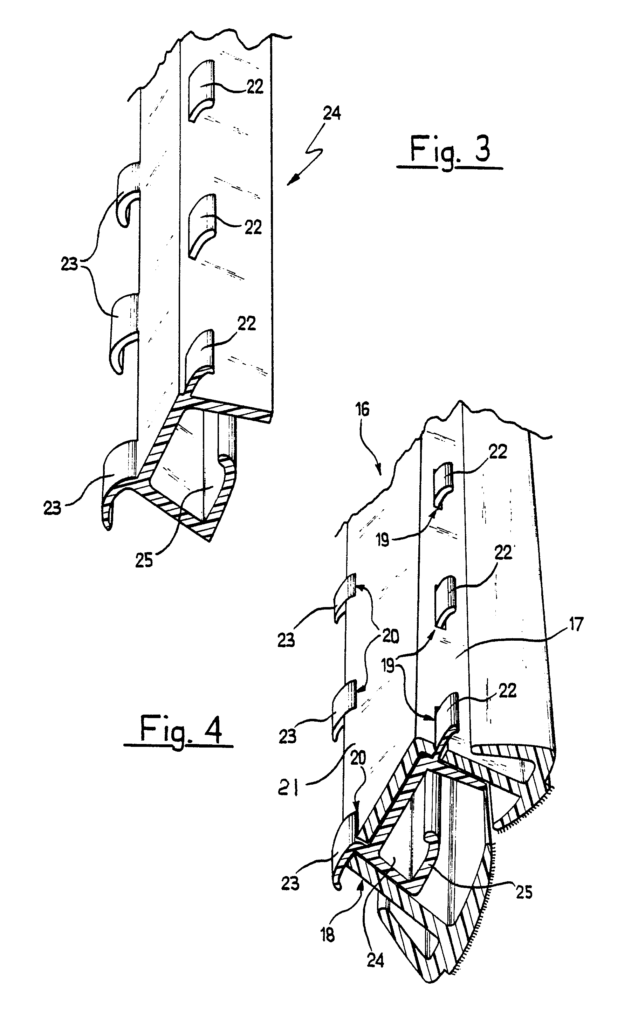

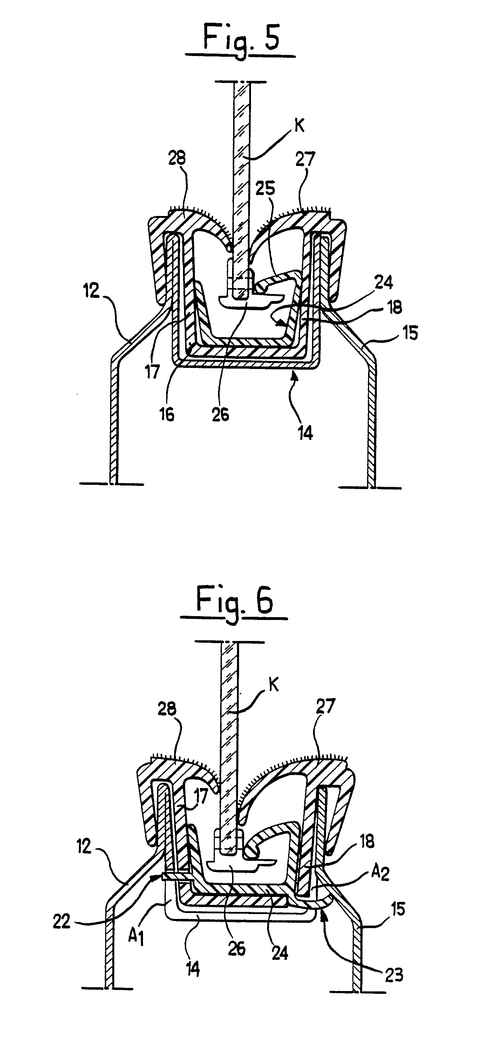

As is clearly illustrated in fig. 4, the abovementioned weather strip portion 16 is provided, at both lateral walls 17-18, with a series of through slots 19 and, respectively, 20, spaced complementarily with respect to the series of openings A1-A2 of the raceway 11. The series of slots 19 is provided on the lateral wall 17; the series of slots 20 is provided substantially on the corner formed by the wall 18 and by the bottom 21 of the portion of weather strip 16. Corresponding flaps 22 and 23 pass through the slots 19 and 20, and are supported by an insert 24 in rigid material, advantageously polymeric material. The insert 24 is intended to be accommodated inside the channel-like accommodation of the weather strip portion 16 and is provided, in its interior, with a continuous flap 25, possibly flocked, which is adapted to engage, in an undercut manner, a slider 26 connected in a known manner to the edge of the window pane K (figs. 5 and 6) for guiding and retaining said window pane. The flaps 22 and 23 project from the corresponding slots 19 and 20 by a portion which is wide enough to allow their engagement respectively with the lower edge of the openings A1 and with the sheeting 15 of the upright 10.

The assembly of the insert 24 is performed in a snap-together manner, by virtue of the intrinsic elasticity of the flaps 22 and 23 which, besides having the function of retention for the weather strip portion 16, also have the additional function of transferring the stresses produced by the slider 26 rigidly associated with the window pane K directly to the sheeting 12 and 15.

As is clearly illustrated in the figures, the lateral walls 17 and 18 of the portion 16 both end with an end lip 27-28 which on one side is folded in the shape of an inverted U to grip and hide the sheeting of the upright, and on the other side extends towards the center of the weather strip to engage the window pane K with advantageously flocked sliding surfaces 29-30.

Naturally, all the models which achieve equal utility using the same inventive concept are within the scope of the present invention.

## Claims

1. Composite weather strip for the guiding and retention of concealable slideable window panes for automotive vehicles, comprising horizontal, subvertical and vertical portions with differentiated geometry, connected to one another by continuity in extrusion and/or glueing and over-molding, and wherein the vertical upright portion is provided with means to slideably engage and retain a slider (26) for the guiding and retention of the window pane (K), characterized in that at least said vertical portion of the weather strip (16) is provided, on both vertical walls (17, 18), with a series of through slots (19,20) which are spaced complementarily with respect to the openings (A1,A2) formed on the vertical raceway (11) portion of the upright; slots (19,20) through which protrude corresponding lateral tabs (22,23) supported by an insert (24) in rigid material which accommodates inside the channel-like housing of the weather strip (16) and is provided with a guiding (25) and retention flaps for the window pane's slider (26); said lateral tabs (22,23) being adapted to engage in snap-together engagement relationship in the spaced openings (A1,A2) of the vertical portion of the raceway (11) to retain the weather strip (16) and to transfer directly to the sheeting (12 and 15) of the door (P) the stresses produced by said slider (26) of said window pane (K).

2. Weather strip according to claim 1 characterized in that said insert (24) is made of polymeric material.

3. Weather strip according to claims 1 and 2, characterized in that said series of slots (19,20) are provided one (19) on a lateral wall (17) of the weather strip (16) and the other (20) at the corner formed by the other lateral wall (18) and by the end wall (21).

4. Weather strip according to one or more of the preceding claims, comprising a vertical upright portion (10) and horizontal and subvertical portions connected to said vertical portion which is intended to accommodate in a corresponding vertical portion of a retention raceway (11) formed by folding spaced strips (14) blanked on a flap of the sheeting of the door upright; said weather strip (16) comprising a rigid insert (24) provided with fins (22,23) which pass through corresponding slots (19,20) of the weather strip (16) to engage in snap-together engagement relationship in the openings (A1,A2) comprised between said strips (14).

Fig. 1

Fig. 2

Fig. 3

Fig. 4

## Fig. 5

## Fig. 6